# EUROPÄISCHE PATENTSCHRIFT

(11) **EP 3 414 172 B1**
(45) Veröffentlichungstag und Bekanntmachung des Hinweises auf die Patenterteilung: **03.04.2024**
(21) Anmeldenummer: 17703168.9
(22) Anmeldetag: 08.02.2017
(51) Int. Cl.: B65D 6/04, B65D 6/16, B65D 21/02

(54) **TRAY BZW. LAGER- UND TRANSPORTBEHÄLTER FÜR KUNSTSTOFFBEHÄLTNISSE**
TRAY OR STORAGE AND TRANSPORT CONTAINER FOR PLASTIC RECEPTACLES
PLATEAU OU CONTENANT D'ENTREPOSAGE ET DE TRANSPORT POUR CONTENANTS EN PLASTIQUE

(30) Priorität: 12.02.2016 CH 1922016
(43) Veröffentlichungstag der Anmeldung: 19.12.2018
(73) Patentinhaber: Alpla Werke Alwin Lehner GmbH & Co. KG, 6971 Hard (AT)
(72) Erfinder: RIEDMANN, Jürgen, 6973 Höchst (AT)
(74) Vertreter: Bohest AG Branch Ostschweiz
(86) Internationale Anmeldenummer: PCT/EP2017/052774
(87) Internationale Veröffentlichungsnummer: WO 2017/137447

(56) Entgegenhaltungen:
- GB-A- 1 078 484
- NL-C2- 1 018 048
- US-A- 2 714 471
- US-A- 4 232 916
- US-A- 4 457 432

## Beschreibung

Die Erfindung betrifft einen Tray bzw. Lager- und Transportbehälter für Kunststoffbehältnisse, insbesondere Kunststoffflaschen, gemäss dem Oberbegriff des Patentanspruchs 1.

Die in der Vergangenheit üblichen Behältnisse aus Weiss- oder Buntblech, aus Glas oder auch aus Keramik werden in zunehmendem Mass von Behältnissen aus Kunststoff abgelöst. Insbesondere für die Verpackung fluider Substanzen, beispielsweise von Getränken, fliessfähigen Lebensmitteln wie z.B. Ketchup, Sugo, Pesto, Saucen, Senf, Mayonnaise und dergleichen, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien, die Verwendung von Biokunststoffen und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Nach ihrer Herstellung in einem Blasformverfahren (Extrusionsblasverfahren, Streckblasverfahren, Spritzblasverfahren) werden die leeren Kunststoffbehältnisse entweder direkt zu einer Abfüllstation weiter transportiert, oder sie werden in Behälter eingefüllt, um sie zwischenzulagern und zu einem späteren Zeitpunkt zu einem Standort mit einer Abfüllstation zu transportieren, der in der Nähe oder auch in grösserer Entfernung von einer Fabrikationsanlage zur Herstellung von Kunststoffbehältnissen gelegen sein kann. Vielfach werden die Kunststoffbehältnisse in Produktionsstätten hergestellt, die auf die Herstellung derartiger Produkte spezialisiert sind, und von dort zu einem Hersteller von Produkten, die in die Kunststoffbehältnisse abgefüllt werden sollen, transportiert. Der Transport kann beispielsweise auf der Strasse, auf Schiene oder per Schiff erfolgen.

Für ihre Lagerung und für den Transport werden die Kunststoffbehältnisse in Lager- und Transportbehälter, sogenannte Trays, geladen. Das Beladen der Trays erfolgt beispielsweise in halb- oder vollautomatischen Be- und Entladeanlagen, die in Anschluss an eine Produktionsanlage, beispielsweise eine Blasvorrichtung für Kunststoffbehälter, oder vor einer Abfüllstation angeordnet sein können.

Die aus dem Stand der Technik bekannten Trays können beispielsweise aus Karton gefertigt sein. Nachteilig an den Kartontrays ist ihre geringe Eigenstabilität, die oft zu Beschädigungen der Trays führen kann. Es besteht auch ein gewisses Risiko, dass in den Trays gelagerte Kunststoffbehältnisse verunreinigt oder sogar beschädigt werden. Die aus Karton gefertigten Trays sind anfällig gegenüber Feuchtigkeit und können nur relativ selten öfters wiederverwendet werden. Aus dem Stand der Technik sind auch bereits Trays bekannt, die aus Kunststoff gefertigt sind. Die einzelnen Trays können dabei stapelbar ausgebildet sein. Kunststofftrays weisen den Nachteil auf, dass die in ihnen gelagerten Kunststoffbehältnisse sich infolge Reibung an den Wandungen der Trays elektrostatisch aufladen können. Dies kann dann dazu führen, dass Verunreinigungen angezogen werden. Auch kann Kunststoffabrieb in das Innere der Behältnisse gelangen, was in jedem Fall verhindert werden soll. Die bekannten Kunststofftrays sind relativ teuer in der Herstellung und aufgrund ihrer Abmessungen von bis zu 1200 mm x 1200 mm x 400 mm (Länge x Breite x Höhe) im leeren Zustand relativ sperrig und entsprechend schwierig zu transportieren. Die Kunststofftrays benötigen im leeren Zustand das gleiche Volumen wie gefüllte Trays. Das bedeutet, dass für den Transport der leeren Kunststofftrays der gleiche Aufwand betrieben werden muss wie für den Transport der gefüllten Trays. Somit ist beispielsweise für den Transport der leeren Kunststofftrays auf der Strasse die gleiche Anzahl von LKW-Fahrten erforderlich wie für die beladenen Kunststofftrays. Die NL1018048C2 offenbart einen Tray aus Blech mit einem ebenen Trayboden und rechteckförmigen ebenen Seitenwänden, die über Steckverbindungen lösbar miteinander und mit dem Trayboden verbindbar sind. Die US2714471A betrifft einen Traystapel und einen Tray aus Blech, dessen Seitenwände und Trayboden sind miteinander mittels Punktschweissen gekoppelt.

Aufgabe der vorliegenden Erfindung ist es daher, den geschilderten Nachteilen der Trays bzw. Lager- und Transportbehälter des Stands der Technik abzuhelfen. Es soll ein Lager- und Transportbehälter geschaffen werden, der einfach herstellbar, transportierbar und montierbar ist. Die Lager- und Transportbehälter sollen derart ausgebildet sein, dass eine elektrostatische Aufladung der darin gelagerten Kunststoffbehältnisse möglichst verhindert ist. Ferner soll der Lager- und Transportbehälters mehrmals nutzbar sein.

Die Lösung dieser und noch weiterer Aufgaben besteht in einem Lager- und Transportbehälter, welcher die im Patentanspruch 1 angeführten Merkmale aufweist. Weiterbildungen und/oder vorteilhafte Ausführungsvarianten der Erfindung sind Gegenstand der abhängigen Patentansprüche.

Die Erfindung schlägt einen Tray bzw. Lager- und Transportbehälter für Kunststoffbehältnisse, insbesondere für Kunststoffflaschen, vor, der einen im wesentlichen orthogonalen ebenen Trayboden und im wesentlichen rechteckförmige ebenen Seitenwände aufweist. Die Seitenwände sind über Steckverbindungen lösbar miteinander und mit dem Trayboden verbindbar und weisen Innenflächen auf, die metallisch bzw. metallisiert ausgebildet sind.

Die Seitenwände sind werkzeuglos miteinander und mit dem Trayboden montierbar. Für den Transport im leeren Zustand können die Trays in ihre Einzelteile werkzeuglos zerlegt werden. Dadurch verringert sich das von den Trays eingenommene Volumen deutlich, und ihr Transport kann viel einfacher, kostengünstiger und ökologischer durchgeführt werden. Am Zielort können die Trays wieder sehr einfach werkzeuglos zusammengebaut werden. Indem wenigstens die in das Trayinnere weisenden Innenflächen der Seitenwände metallisch bzw. metallisiert ausgebildet sind, wird dem Problem einer statischen Aufladung der innerhalb der Trays gelagerten und transportierten Kunststoffbehälter entgegengewirkt. Dadurch kann eine Anziehung von Schmutzpartikeln vermieden werden. Die metallischen bzw. metallisierten Innenflächen wenigstens der Seitenwände wirken auch einem Abrieb von Kunststoff entgegen. Ferner sind die Seitenwände und der Trayboden geschlossen, also ohne Durchbrüche, ausgebildet. Somit können durch die Seitenwände und den Trayboden keine Verunreinigungen in das Innere des Trays eindringen, die die Kunststoffbehältnisse verschmutzen könnten. Ferner kann der Tray durch einen Deckel verschlossen werden, um auch ein Eindringen von Verunreinigungen von einer dem Trayboden gegenüberliegenden Seite zu verhindern. Hierbei kann der Trayboden als Deckel ausgebildet sein. Der Trayboden kann eine Oberseite und eine der Oberseite gegenüberliegende, von ihr beabstandete und mit ihr mittels einer Seitenwandung unlösbar verbundene Unterseite aufweisen. Die Oberseite kann Befestigungsmittel aufweisen, die zur Befestigung der Seitenwände an dem Trayboden dienen. Die Unterseite des Traybodens kann derart ausgeformt sein, dass der Trayboden auf freie Längskanten der Seitenwände aufsetzbar ist. Der Trayboden ist nach dem Aufsetzen auf die Seitenwände von den Seitenwänden in entgegengesetzter Richtung abhebbar. Die Unterseite des Traybodens kann derart ausgebildet sein, dass sich der auf die Seitenwände aufgesetzte Trayboden an den Innenseiten der Seitenwände oder an deren Außenseiten zentriert. In einer Ausführungsform springt die Unterseite des Traybodens derart in Richtung der Oberseite zurück, dass die Unterseite des Traybodens eine Wandung ausbildet, die die Seitenwände an ihren Außenseiten zumindest teilweise umfasst. Zusätzlich kann die Wandung eine Einführschräge aufweisen, die ein Überstülpen der Unterseite des Traybodens über die Außenseiten der Seitenwände erleichtert. Erfindungsgemäss weist eine die freien Längskanten der Seitenwände umfassende Wandung des Traybodens eine Federwirkung auf. Ferner kann die Wandung derart ausgebildet sein, dass sie zumindest teilweise an den Außenseiten der Seitenwände spielfrei anliegt. In einem Ausführungsbeispiel kann die Spielfreiheit erzeugt werden, dass die Wandung kraftschlüssig, insbesondere federnd, zumindest an Teilbereichen der Außenseiten der Seitenwände anliegt. Hierdurch ist der Trayboden in seiner Funktion als Deckel mit den (darunter liegenden) Seitenwänden in vertikaler Richtung lösbar und in horizontaler Ebene, also in translatorischer und rotatorischer Richtung, spielfrei fixiert. Diese spielfreie Fixierung kann ermöglichen, dass die Trays übereinander zu Türmen stapelbar sind, die bis 4m und darüber hoch sind. Weiterhin kann die Wandung umlaufend an den Außenseiten der Seitenwände anliegen. Hierdurch kann ein Eindringen von Verunreinigungen im Bereich des Deckels weitestgehend vermieden werden. Der Trayboden kann ein einstückiges Blechbiegeteil sein.

In einer Ausführungsvariante der Erfindung können die Trays einen rechteckigen Trayboden aufweisen. Dann sind jeweils zwei, im montierten Zustand einander gegenüberliegende Seitenwände gleichartig ausgebildet. In einer weiteren Ausführungsvariante der Erfindung kann der Trayboden auch quadratisch ausgebildet sein. In diesem Fall sind alle vier Seitenwände gleichartig ausgebildet. Dies erleichtert die Herstellung der Trays, insbesondere der Seitenwände, und deren Lagerung und Logistik.

Für die Erstellung der Steckverbindungen weist jede Seitenwand eine Anzahl von im wesentlichen hakenförmig ausgebildeten Verbindungsvorsprüngen auf, die von ihrer einen Seitenkante abragen. An ihrem gegenüberliegenden Längsende ist eine Seitenwand mit einer korrespondierenden Anzahl von in der Innenfläche ausgebildeten, übereinander angeordneten Aufnahmen für Verbindungsvorsprünge einer benachbarten Seitenwand ausgestattet. Zusätzlich sind die Seitenwände an einer senkrecht zu den Seitenkanten verlaufenden Längskante mit abragenden Stecklaschen ausgestattet. Die Stecklaschen dienen zur Steckverbindung der Seitenwände mit dem Trayboden, insbesondere der Oberseite des Traybodens, der zu diesem Zweck entlang seiner vier Seiten mit korrespondierenden Einstecköffnungen ausgestattet ist. Prinzipiell könnten die Stecklaschen auch vom Trayboden abragen und könnten die korrespondierenden Einstecköffnungen auch in der Längskante einer Seitenwand ausgebildet sein. Aus fertigungstechnischen Gründen und wegen der geringeren Gefahr von Beschädigungen der Stecklaschen beim Transport der zerlegten Trays erweisen sich jedoch die Anordnung der Stecklaschen an den Seitenwänden und das Vorsehen der Einstecköffnungen im Trayboden als zweckmässiger. In einer weiteren Ausführungsvariante der Erfindung sind die Einstecköffnungen in einer Innenseite des Traybodens ausgebildet.

Eine Ausführungsvariante der Trays, die sich durch ihre kostengünstige Herstellbarkeit auszeichnet, sieht vor, dass wenigstens die Seitenwände als Blechprofile ausgebildet sind. Bleche sind einfach herstellbar und verarbeitbar. Ihre Eigensteifigkeit kann durch geeignet angebrachte Sicken und Rippen verstärkt sein.

In einer weiteren Ausführungsvariante der Erfindung sind wenigstens die freie Längskante und das mit den Aufnahmen versehene Längsende der als ein Blechprofil ausgebildeten Seitenwand gefalzt ausgebildet. Dadurch kann die Steifigkeit der Seitenwände noch weiter erhöht werden.

Ein Ausführungsbeispiel der Erfindung kann vorsehen, dass auch der Trayboden als ein Blechprofil ausgebildet ist. Zur Erhöhung der Steifigkeit des Traybodens können alle vier Seiten des Traybodens gebogen ausgebildet sein.

Als Materialien für die Blechprofile kommen Aluminium oder Stahl in Frage. Dabei handelt es sich bei den Aluminiumblechen vorzugsweise um eloxiertes Aluminium bzw. bei den Stahlblechen in der Regel um einen rostfreien Stahl. Zur Fertigung der Seitenwände und des Traybodens kann bereits eloxiertes Aluminium gestanzt, entgratet und anschließend gebogen werden. Obzwar eine Eloxalschicht per se elektrisch nichtleitend ist, hat es sich dennoch gezeigt, dass die Trays, die aus Seitenwänden und Trayboden gemäß oben dargestellten Verfahren gefertigt wurden, in montiertem Zustand eine statische Aufladung von in den Trays verpackten Flaschen wirkungsvoll verhindern. Die Wandstärke der Bleche kann beispielsweise etwa 0,5 mm bis 3 mm, bevorzugt 1 mm bis 2mm, betragen.

Der Trayboden und die Seitenwände sind in einer weiteren Ausführungsvariante der Erfindung als Blechstanzteile ausgebildet. Die Blechzuschnitte können neben dem Stanzen auch durch Wasserstrahlschneiden oder Laserschneiden gefertigt werden, wobei die Blechzuschnitte in nachgeordneten Arbeitsschritten in die vorbestimmte Form gebogen werden und hierdurch ein Blechprofil hergestellt wird. Durch den Verzicht auf jegliche Art der spanenden Behandlung der Einzelkomponenten können Späne vermieden werden, die ansonsten möglicherweise die Kunststoffbehälter verunreinigen könnten.

Eine weitere Ausführungsvariante der Erfindung kann vorsehen, dass Seitenwandungen des Traybodens, welche die Oberseite und die Unterseite unlösbar miteinander verbinden und in den Ecken stumpf aneinandergrenzen, mit Eckverbindern versteift sind. Die Eckverbinder können von der Unterseite her in Richtung der Oberseite eingepresst oder eingeschlagen werden und verbinden die jeweils aneinander angrenzenden Seitenwandungen. Der Eckverbinder ist an jede der beiden Seitenwandung formschlüssig verbunden. Der Formschluss kann durch zusätzlichen Kraftschluss unterstützt werden. Derart ausgesteifte Ecken können verhindern, dass durch die Belastungen des Traybodens die aneinandergrenzenden Seitenwandungen, die ohne die Eckverbinder miteinander nicht verbunden wären, auseinander gedrückt werden. Die Seitenwandungen können Durchbrüche aufweisen, in die speziell ausgeformte Greifarme eingreifen können, um die Trayböden, respektive die Trays oder Traystapel anzuheben.

In einer Ausführungsvariante der Erfindung kann der Trayboden Abmessungen aufweisen, die bis zu 1400 mm x 1200 mm betragen. Bei einer quadratischen Ausführungsvariante des Tray betragen seine Aussenmasse bis 1200 mm x 1200 mm. Die Höhe eines Trays ist variabel und kann von 150 mm bis 400 mm betragen.

In einer weiteren Ausführungsvariante der Erfindung Tray kann der Trayboden derart ausgebildet sein, dass durch seine Unterseite freie Längskanten der Seitenwände eines darunter angeordneten Trays jeweils unverückbar umgreifbar sind. Diese Ausführungsvariante ist insbesondere für die Stapelbarkeit von mehreren Trays übereinander von Interesse. Eine weitere Ausführungsvariante eines erfindungsgemässen Trays kann vorsehen, dass der Trayboden eine Wandung aufweist und derart ausgebildet ist, dass die freie Längskanten der Seitenwände umfassende Wandung eine Federwirkung aufweist. Dadurch kommt es beim Stapeln von Trays übereinander zu einer automatischen, kraftschlüssigen Fixierung der Trays aneinander.

Nicht nur sind die erfindungsgemässen Trays zerlegbar und werkzeuglos wieder zusammenbaubar, sie sind auch stapelbar. Ein Traystapel umfasst dabei eine Anzahl von übereinander angeordneten Trays, die gemäss einer der vorstehend geschilderten Ausführungsvarianten ausgebildet sein können. Dabei bildet jeweils der Trayboden eines oberen Trays einen Deckel für einen unmittelbar darunter angeordneten Tray. Die Trayböden sind dabei derart ausgebildet, dass ihre Unterseite jeweils unverrückbar die freien Längskanten der Seitenwände des darunter angeordneten Trays umgreift und diese vorzugsweise unter einer gewissen Vorspannung hält. An den Unterseiten des Traybodens können Einführschrägen vorgesehen sein, die das Aufsetzen des oberen Trays auf die freien Längskanten der Seitenwände des darunter angeordneten Trays erleichtern. Eine die freien Längskanten der Seitenwände umfassende Wandung des Traybodens kann eine Federwirkung aufweisen. Ferner kann die Wandung an ihrem freien Ende einfach gefalzt sein. Unter dem Begriff "einfach falzen" ist zu verstehen, dass die Kante derart U-förmig umgelegt wird, dass sich die Innenseiten der beiden einander gegenüber liegenden Schenkel zumindest teilweise berühren. Hierdurch kann zum einen die Wandung verstärkt werden und damit die Federkraft erhöht werden, und zum anderen zusätzlich ein Kantenschutz geschaffen werden, welcher das scharfkantige Blech abrundet und die Seitenwände des in einem Stapel darunter angeordneten Trays vor Schnitten und Kratzern schützt.

Eine Ausführungsvariante der Erfindung kann dazu noch vorsehen, dass der an oberster Position angeordnete Tray einen Deckel aufweist, der unverlierbar und lösbar auf die freien Längskanten der Seitenwände des obersten Trays aufgesteckt ist. Beispielsweise kann der Deckel ein Trayboden sein. Ferner kann der oberste Tray auch mittels eines Transportbodens geschlossen werden. Dieser Transportboden, auf dem der Trayboden des untersten Tray von übereinander gestapelten Trays angeordnet ist, ist zumeist aus Stahlblech, insbesondere nicht-rostendem Stahlblech, gefertigt und in der Regel schwerer, belastbarer und gegenüber Krafteinwirkungen von Außen wie Schieben oder Rempeln widerstandsfähiger als der in der Regel aus Aluminium gefertigte Bodentray. Der Transportboden kann wie der Bodentray ausgebildet sein. Dabei können auch Einführschrägen ausgebildet sein. Der Transportboden weist in der Regel auch Seitenwände auf, die jedoch nur so hoch sind, dass sie die Oberseite des Traybodens nicht berühren, wenn die Unterseite des Traybodens auf einer Oberseite des Transportbodens vollflächig aufliegt. Die Seitenwände können in Analogie zu der Ausbildung des Trays mit dem Transportboden lösbar verbunden sein oder auch mit diesem unlösbar verbunden sein wie beispielsweise durch Löten oder Schweißen. Wenn der Transportboden wie ein Trayboden ausgebildet ist, kann dieser auch als Trayboden des untersten Trays verwendet werden. Damit unterscheidet sich der unterste Tray hinsichtlich des Materials seines Traybodens, nämlich Stahl, von den darüber gestapelten Trays, bei denen der Trayboden in der Regele aus Aluminium gefertigt ist. In dieser Ausgestaltung bietet der unterste Tray mit seinem aus Stahl gefertigten Trayboden die gleichen Vorteile hinsichtlich Belastbarkeit und Widerstandsfähigkeit gegenüber Krafteinwirkungen von außen wie ein auf einem Transportboden angeordneter Tray mit einem aus Aluminium gefertigten Trayboden. Die in einem Traystapel angeordneten Kunststoffbehälter sind durch den abschliessenden Deckel, der als Trayboden oder Transportboden ausgebildet sein kann, komplett vor Verunreinigungen geschützt.

Der unterste Trays kann einen Trayboden aufweisen, an dessen Unterseite Standfüsse angeordnet sind. Die Anordnung und Ausbildung der Standfüsse kann dabei derart gewählt sein, dass die Gabel einer fahrbaren Hebevorrichtung, beispielsweise eines Gabelstaplers oder eines Hubwagens, unter den Trayboden des untersten Trays eingefahren werden können, um den Traystapel anzuheben und/oder zu transportieren. Die Standfüsse können auch an den Seitenwandungen ausgebildet sein. Auch an einem Transportboden können derartigen Standfüsse ausgebildet sein.

Die maximale Gesamthöhe eines Traystapels kann bis 4000 mm betragen. Grundsätzlich sind auch grössere Stapelhöhen denkbar. Aus Gründen der Stabilität des Traystapels bei dessen Transport und Manipulation wird der angeführten Maximalhöhe jedoch der Vorzug gegeben.

Weitere Vorteile und Merkmale ergeben sich aus der nachfolgenden Beschreibung einer beispielsweisen Ausführungsvariante der Erfindung unter Bezugnahme auf die schematischen Zeichnungen, die nicht massstabsgetreu dargestellt sind.
- Fig. 1: zeigt eine perspektivische Ansicht eines teilweise montierten Ausführungsbeispiels eines Trays;
- Fig. 2: zeigt eine Unterseite eines Traybodens;
- Fig. 3: zeigt eine perspektivische Ansicht einer Seitenwand;
- Fig. 4: zeigt eine Aufsicht auf eine Aussenfläche der Seitenwand;
- Fig. 5: zeigt eine Aufsicht auf eine Innenfläche der Seitenwand;
- Fig. 6: zeigt eine vergrösserte Darstellung eines Eckabschnitts zweier miteinander verbundener Seitenwandungen eines Traybodens mit einem eingepressten Eckverbinder;
- Fig. 7: zeigt ein Ausführungsbeispiel eines Eckverbinders;
- Fig. 8: zeigt eine perspektivische Ansicht zweier übereinander gestapelter Trays; und
- Fig. 9: zeigt eine vergrösserte Schnittdarstellung eines Abschnitts zweier übereinander gestapelter Trays.

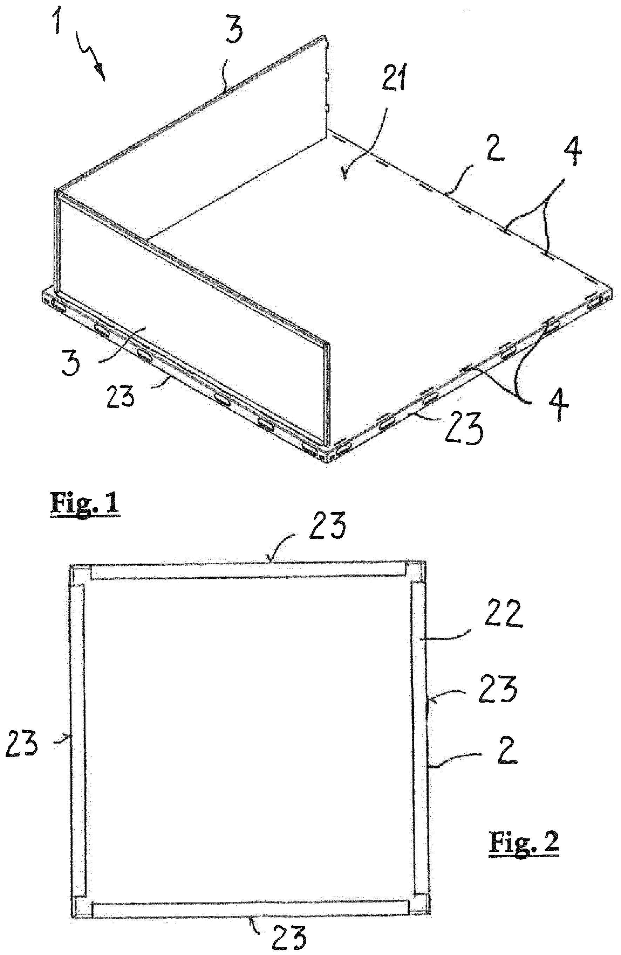

Ein in Fig. 1 dargestellter Tray bzw. Lager- und Transportbehälter für Kunststoffbehältnisse, insbesondere Kunststoffflaschen, ist gesamthaft mit dem Bezugszeichen 1 versehen. Er umfasst einen im wesentlichen orthogonalen ebenen Trayboden 2 mit einer Oberseite, die im Folgenden Innenseite 21 genannt wird, und im wesentlichen rechteckförmige Seitenwände 3, die über Steckverbindungen miteinander und mit dem Trayboden 2 verbunden sind. Dazu sind in der Innenseite 21 des Traybodens 2 Einstecköffnungen 4 ausgespart, die entlang der vier Seitenwandungen 23 des Traybodens 2 angeordnet sind. Die Seitenwände 3 ragen etwa senkrecht vom Trayboden 2 ab. Der in Fig. 1 dargestellte Tray 2 ist nur teilweise montiert, insbesondere sind nur zwei Seitenwände 3 dargestellt. Es versteht sich, dass ein vollständig montierter Tray 1 vier Seitenwände 3 aufweist.

Der in Fig. 1 dargestellte Tray 1 besitzt einen quadratischen Trayboden 2. Entsprechend sind die vier Seitenwände 3 gleichartig ausgebildet bzw. weisen die gleiche Längserstreckung auf. In einer nicht näher dargestellten alternativen Ausführungsvariante kann der Trayboden rechteckförmig ausgebildet sein. Dann sind jeweils zwei Seitenwände, die einander im montierten Zustand gegenüberliegen, gleichartig bzw. jeweils gleich lang ausgebildet. In der rechteckigen Ausführungsvariante kann der Trayboden Abmessungen aufweisen, die bis zu 1400 mm x 1200 mm betragen. Bei einer quadratischen Ausführungsvariante des Tray 1 betragen seine Aussenmasse bis 1200 mm x 1200 mm. Die Höhe eines Trays 1 ist variabel und kann von 150 mm bis 400 mm betragen. Die Höhe eines Trays 1 setzt sich dabei aus der Höhe des Traybodens 2 und der Höhe der eingesteckten Seitenwände 3 zusammen.

Fig. 2 zeigt eine Unteransicht des Traybodens 2. Die als Innenseite 21 bezeichnete Oberseite des Traybodens 2 ist mittels vier Seitenwandungen 23 mit einer Unterseite 22 verbunden. Deutlich sichtbar ist, dass die Unterseite 22 in ihren Ecken ausgeklinkt ist, jedoch die Seitenwandungen 23 stumpf aneinander angrenzen.

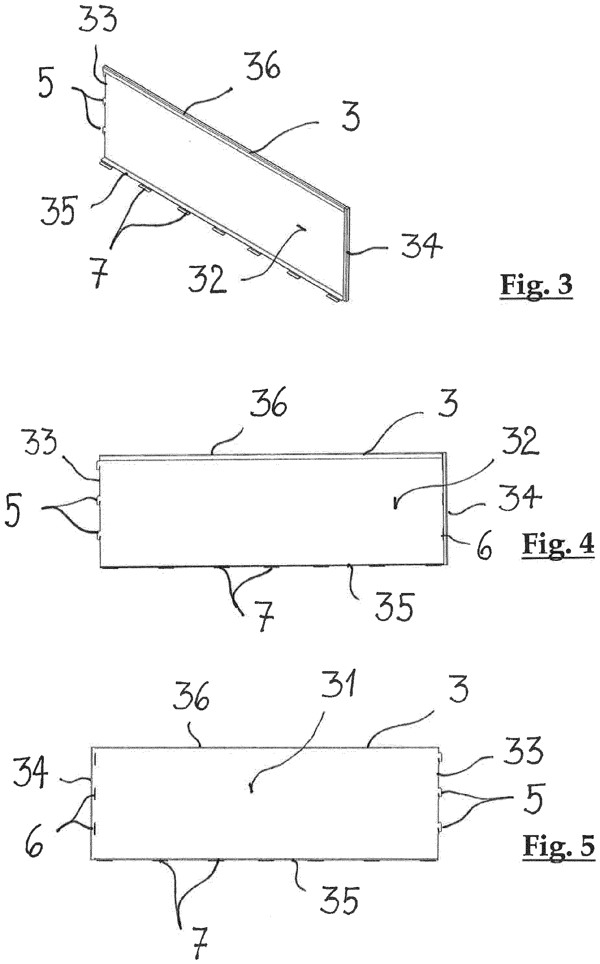

Fig. 3 bis 5 zeigen verschiedene Ansichten einer beispielsweisen Seitenwand 3. Die Seitenwand 3 besitzt eine Innenfläche 31 und eine Aussenfläche 32. Von einer Seitenkante 33 eines Längsendes der Seitenwand 3 ragen hakenförmig ausgebildete Verbindungsvorsprünge 5 ab. Die Verbindungsvorsprünge 5 sind im Abstand voneinander übereinander angeordnet. Am gegenüberliegenden Längsende 34 der Seitenwand 3 sind in ihrer Innenfläche 31 Aufnahmen 6 für die Verbindungsvorsprünge 3 an der Seitenkante der benachbarten Seitenwand ausgespart. Die Anzahl und die Anordnung der Aufnahmen 6 sind korrespondierend zu der Anzahl und der Anordnung der Verbindungsvorsprünge 5 ausgebildet. Die Aufnahmen 6 durchsetzen die Seitenwand 3 vollständig, wie in Fig. 4 angedeutet ist. An einer im montierten Zustand unteren Längskante 35 der Seitenwand 3 sind Stecklaschen 7 angeordnet. Die Stecklaschen 7 ragen von der Längskante 35 ab und erstrecken sich in Richtung der Aussenfläche 32 der Seitenwand 3. Die Stecklaschen 7 dienen zur Montage der Seitenwand 3 auf dem Trayboden 2 und werden in die Einstecköffnungen 4 in der Innenseite 21 des Traybodens 2 eingeschoben (Fig. 1). Eine im montierten Zustand der Seitenwand 3 freie Längskante 36 und das mit den Aufnahmen 6 ausgestattete freie Längsende 34 der Seitenwand 3 sind nach außen abragend U-förmig gebogen.. Somit ergeben sich am fertig montierten Tray über seine gesamte Innenhöhe ebene Innenflächen 31. Die U-förmige Biegung des Längsendes 34 ist in der gleichen Art und in der gleichen Richtung ausgebildet wie die U-förmige Biegung der Längskante 36. Der eine Schenkel der U-förmigen Biegung des Längsende 34 überdeckt die Außenfläche 32 wo weit, dass die in die Aufnahmen 6 eingehängten Verbindungsvorsprünge 5 der abgrenzenden Seitenwand überdeckt sind. Die die Stecklaschen 7 tragende Längskante 35 der Seitenwand 3 ist um etwa 90° in Richtung der Aussenfläche 32 abgewinkelt. Dadurch ergibt sich eine verbesserte Auflage der Seitenwand 3 auf der Innenseite 21 des Traybodens 2.

Grundsätzlich würde es ausreichen, wenn wenigstens die Innenflächen 31 der Seitenwände 3 metallisch oder metallisiert ausgebildet sind. Aus fertigungstechnischen Gründen erweist es sich als zweckmässig, wenn die Seitenwände 3 gesamthaft aus Metall, insbesondere aus einem eloxierten Aluminiumblech oder aus einem rostfreien Stahlblech bestehen. Auch der Trayboden 2 kann aus Metall, insbesondere aus einem eloxierten Aluminiumblech oder aus einem rostfreien Stahlblech gefertigt sein. Zur Erzeugung von elektrisch leitfähigen Verbindungen sind die aus eloxiertem Aluminiumblech gefertigten Seitenwände 3 und Trayböden 2 aus eloxiertem Aluminiumblech gestanzt, entgratet und gebogen und die Trays 1 aus diesen mittels dem beschriebenen Verfahren gefertigten Seitenwänden 3 und Trayböden 2 montiert werden. Dabei sind die Seitenwände 3 und der Trayboden 2 vollständig als Stanzteile ausgebildet. Auf eine spanende Bearbeitung der Bauteile wird verzichtet. Die Bleche weisen eine Wandstärke von beispielsweise 0,5 mm bis 3 mm, bevorzugt zwischen 1 mm und 2 mm, auf.

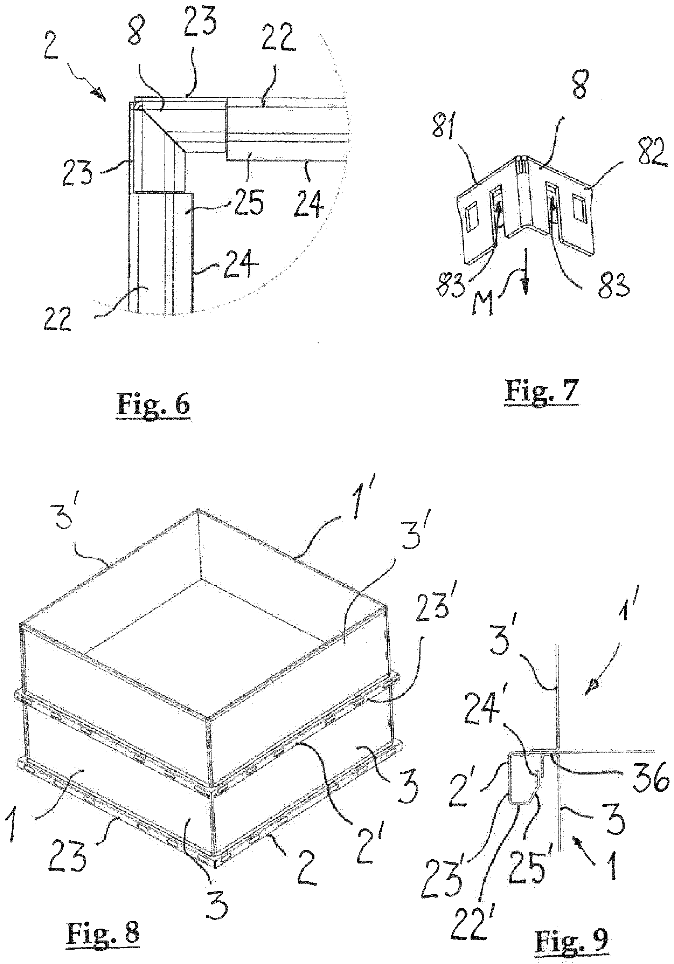

Fig. 6 zeigt in vergrössertem Massstab ein Detail aus einer Unterseite des Trayboden 2, bei dem zwei stumpf aneinander angrenzende Seitenwandungen 23 mittels eines Eckverbinders 8 miteinander unlösbar mechanisch verbunden sind. Somit entfällt eine stoffschlüssige Verbindung wie Schweißen oder Löten der Seitenwandungen 23. Ferner ist eine Einführschräge 25 der Unterseite 22 und eine sich an die Einführschräge 25 anschließende Wandung 24 erkennbar. Wie in Figur 9 erkennbar ist, schließen die Wandung 24 und die Oberseite 21 einen Winkel ein, der größer als 90° ist. In der Regel beträgt der eingeschlossene Winkel von etwa 91° bis etwa 95°. Ein von der Einführschräge 25 und der Oberseite 21 eingeschlossener Winkel beträgt in der Regel etwa 15° bis etwa 45°, bevorzugt etwa 30°.

Fig. 7 zeigt ein Ausführungsbeispiel eines Eckverbinders 8, der zwei senkrecht zueinander verlaufende Schenkel 81, 82 aufweist. Jeder der Schenkel 81, 82 weist einen Haken 83 auf, der aus dem Schenkel 81, 82 gefertigt ist. Hierbei erstreckt sich der Haken in eine Montagerichtung des Eckverbinders 8, die durch einen Pfeil M bezeichnet ist, Die Öffnung des Hakens ist entgegen der Montagerichtung 84. Der Eckverbinder 8 kann aus einem nichtrostenden Stahl gefertigt sein und ist ein einstückiges Stanz-Biegeteil ausgebildet. Zur Verriegelung des Eckverbinders 8 mit dem Trayboden 2 besitzen die Seitenwandungen 23 ebenfalls in diesem Ausführungsbeispiel nicht dargestellte Haken, die sich quer zu der Montagerichtung erstrecken. Bei der Montage des Eckverbinders 8 hintergreifen die Haken 83 des Eckverbinders 8 die Haken der Seitenwandungen 23. Die miteinander korrespondierenden Haken der Eckverbinder 8 und der Seitenwandungen 23 sind derart dimensioniert, dass sie nach der Montage der Eckverbinder 8 eine kraftschlüssige Verbindung sicherstellen, die sich selbsttätig nicht lösen kann. Zur Montage des Eckverbinders 8 wird dieser eingepresst oder eingeschlagen.

In Fig. 8 sind zwei übereinander gestapelte Trays 1, 1' dargestellt. Die beiden Trays 1, 1' sind gleichartig ausgebildet und umfassen jeweils einen Trayboden 2, 2` und über Steckverbindungen miteinander und mit dem jeweiligen Trayboden 2, 2` verbundene Seitenwände 3, 3'. Die Darstellung zeigt wiederum Trays 1, 1' mit quadratisch ausgebildeten Trayböden 2, 2`. Es versteht sich jedoch, dass die Trayböden auch rechteckförmig ausgebildet sein können. Die Trayböden 2, 2` weisen jeweils vier gleichartig ausgebildete Seitenwandungen 23, 23' auf.

Fig. 9 zeigt eine schematische Schnittdarstellung eines Ausschnitts der beiden übereinander gestapelten Trays 1, 1`. Die Darstellung zeigt eine in den Trayboden 2' des oberen Trays 1' eingesteckte Seitenwand 3' und eine Seitenwand 3 des unteren Trays 1. Die Wandung 24` der Unterseite 22' des Trayboden 2' des oberen Trays 1' übergreift die freie Längskante 36 der Seitenwand 3 des unteren Trays 1. 'Die Unterseite 22' des oberen Traybodens 2' ist dabei beispielsweise derart gebogen, dass die Wandung 24' als federnder Abschnitt ausgebildet ist, der an die Einlaufschräge 25` anschließt. Die Einlaufschräge 25 erleichtert das Aufsetzen des Traybodens 2' des oberen Trays 1' auf die freie Längskante 36 der Seitenwand 3 des unteren Trays 1. Der federnde Abschnitt 24` drückt mit Vorspannung gegen das freie Längsende 36 der Seitenwand 3 des unteren Trays 1. Dadurch sind die beiden übereinander gestapelten Trays 1, 1' mit einem gewissen Kraftschluss aneinander gehalten. Die Vorspannung verhindert auch ein Klappern der zusammengesteckten Bauteile 2, 3. Die Trays können beispielsweise bis zu einer Maximalhöhe von 4000 mm übereinander gestapelt werden. Der oberste Tray eines Traystapels kann mit einem Deckel verschlossen sein. Der Deckel kann dabei wie ein in Fig. 2 dargestellter Trayboden 2 ausgebildet sein. Schliesslich kann der unterste Tray eines Traystapels einen Trayboden aufweisen, an dessen Unterseite Standfüsse angeordnet sind. Der Trayboden des untersten Trays ist gewöhnlich aus nichtrostendem Stahlblech hergestellt und unterscheidet sich damit von den Trayböden der anderen Trays des Stapels, die aus Aluminiumblech, vorzugsweise aus eloxiertem Aluminiumblech, hergestellt sind. Die Anordnung und Ausbildung der Standfüsse kann dabei derart gewählt sein, dass die Gabel einer fahrbaren Hebevorrichtung, beispielsweise eines Gabelstaplers oder eines Hubwagens, unter den Trayboden des untersten Trays eingefahren werden können, um den Traystapel anzuheben und/oder zu transportieren.

Die beispielsweise beschriebenen Trays bzw. Lager- und Transportbehälter für Kunststoffbehältnisse, insbesondere für Kunststoffflaschen, sind werkzeuglos montierbar. Für den Transport im leeren Zustand können die Trays in ihre Einzelteile zerlegt werden. Dadurch verringert sich das von den Trays eingenommene Volumen deutlich, und ihr Transport kann viel einfacher, kostengünstiger und ökologischer durchgeführt werden. Am Zielort können die Trays wieder sehr einfach werkzeuglos zusammengebaut werden. Durch die metallische Ausbildung wenigstens der Innenflächen der Seitenwände wird dem Problem einer statischen Aufladung der innerhalb der Trays gelagerten und transportierten Kunststoffbehälter entgegengewirkt. Dadurch kann eine Anziehung von Schmutzpartikeln vermieden werden. Die metallischen bzw. metallisierten Innenflächen wenigstens der Seitenwände wirken auch einem Abrieb von Kunststoff entgegen. Eine vollständige Ausbildung der Trays als Stanzteile aus Metallblechen, insbesondere aus eloxiertem Aluminium oder aus rostfreiem Stahl, unter vollständigem Verzicht auf spanende Bearbeitung der Bauteile ist aus fertigungstechnischen Gründen und auch aus Sicherheitsgründen erstrebenswert.

Die vorstehende Beschreibung von konkreten Ausführungsbeispielen dient nur zur Erläuterung der Erfindung und ist nicht als einschränkend zu betrachten. Vielmehr wird die Erfindung durch die Patentansprüche und die sich dem Fachmann erschliessenden und vom allgemeinen Erfindungsgedanken umfassten Äquivalente definiert.

## Patentansprüche

1. Traystapel umfassend eine Anzahl von übereinander angeordneten Trays (1, 1'), bzw. Lager- und Transportbehälter für Kunststoffbehältnisse, insbesondere Kunststoffflaschen, wobei die Trays einen im wesentlichen orthogonalen ebenen Trayboden (2, 2') und im wesentlichen rechteckförmige ebene Seitenwände (3, 3') aufweisen, wobei die Seitenwände (3, 3') über Steckverbindungen lösbar miteinander und mit dem Trayboden (2, 2') verbindbar sind und Innenflächen (31, 31') aufweisen, die metallisch bzw. metallisiert ausgebildet sind, **dadurch gekennzeichnet, dass** der Trayboden (2, 2') eine Wandung aufweist und derart ausgebildet ist, dass die freie Längskanten der Seitenwände (3, 3') umfassende Wandung (24, 24') eine Federwirkung aufweist, wobei dazu eine Unterseite (22') des oberen Traybodens (2') derart gebogen ist, dass die Wandung (24') als federnder Abschnitt ausgebildet ist, der an eine Einlaufschräge (25') anschliesst, und dass eine im montierten Zustand der Seitenwand (3, 3') freie Längskante (36) der Seitenwand (3) und ein mit Aufnahmen (6) ausgestattetes freies Längsende (34) der Seitenwand (3) nach aussen abragend U-förmig gebogen sind.

2. Tray eines Traystapels nach Anspruch 1, **dadurch gekennzeichnet, dass** jeweils wenigstens zwei, im montierten Zustand einander gegenüberliegende Seitenwände (3) gleichartig ausgebildet sind.

3. Tray nach Anspruch 2, **dadurch gekennzeichnet, dass** jede Seitenwand (3) eine Anzahl von im wesentlichen hakenförmig ausgebildeten Verbindungsvorsprüngen (5) aufweist, die von ihrer einen Seitenkante (33) abragen, und an ihrem gegenüberliegenden Längsende (34) mit einer korrespondierenden Anzahl von in der Innenfläche (31) ausgebildeten, übereinander angeordneten Aufnahmen (6) für Verbindungsvorsprünge (5) einer anschliessenden Seitenwand (3) ausgestattet ist.

4. Tray nach Anspruch 2 oder 3, **dadurch gekennzeichnet, dass** der Trayboden (2) entlang seiner vier Seiten (23) mit Einstecköffnungen (4) für Stecklaschen (7) ausgestattet ist, die von einer senkrecht zu den Seitenkanten (33, 34) einer Seitenwand (3) verlaufenden Längskante (35) abragen.

5. Tray nach Anspruch 4, **dadurch gekennzeichnet, dass** die Einstecköffnungen (4) an einer Innenseite (21) des Traybodens (2) ausgebildet sind.

6. Tray nach einem der Ansprüche 2 bis 5, **dadurch gekennzeichnet, dass** wenigstens die Seitenwände (3) als Blechprofile ausgebildet sind.

7. Tray nach Anspruch 6, **dadurch gekennzeichnet, dass** wenigstens eine freie Längskante (36) und das mit den Aufnahmen (6) versehene Längsende (34) der Seitenwand (3) gefalzt ausgebildet sind.

8. Tray nach Anspruch 6 oder 7, **dadurch gekennzeichnet, dass** der Trayboden (2) als ein Blechprofil ausgebildet ist.

9. Tray nach einem der Ansprüche 6 bis 8, **dadurch gekennzeichnet, dass** die Blechprofile aus Aluminiumblech, bevorzugt aus eloxiertem Aluminiumblech, oder aus vorzugsweise rostfreiem Stahlblech bestehen.

10. Tray nach einem der Ansprüche 6 bis 9, **dadurch gekennzeichnet, dass** die Seitenwände (3) und der Trayboden (2) Stanzteile sind.

11. Tray nach einem der Ansprüche 2 bis 10, **dadurch gekennzeichnet, dass** der Trayboden (2) eine Oberseite (21), eine der Oberseite (21) gegenüberliegende Unterseite (22) und die Oberseite (21) und die Unterseite (22) miteinander unlösbar verbindende Seitenwandungen (23) aufweist, die in Ecken des Traybodens (2) stumpf aneinandergrenzen, wobei zwei jeweils aneinandergrenzende Seitenwandungen (23) durch einen Eckverbinder (8) selbsttätig unlösbar miteinander verbunden sind.

12. Tray nach einem der Ansprüche 2 bis 11, **dadurch gekennzeichnet, dass** der Trayboden (2) Abmessungen aufweist, die bis zu 1400 mm x 1200 mm betragen.

13. Tray nach Anspruch 12, **dadurch gekennzeichnet, dass** er eine Höhe von 150 mm bis 400 mm aufweist.

14. Tray nach einem der Ansprüche 2 bis 13, **dadurch gekennzeichnet, dass** der Trayboden (2) derart ausgebildet ist, dass durch seine Unterseite (22) freie Längskanten der Seitenwände (3) eines darunter angeordneten Trays jeweils unverückbar umgreifbar sind.

15. Traystapel nach Anspruch 1, **dadurch gekennzeichnet, dass** der an oberster Position angeordnete Tray einen Deckel aufweist, der unverlierbar und lösbar auf die freien Längskanten der Seitenwände des obersten Trays aufsteckbar ist.

16. Traystapel nach Anspruch 1 oder 15, **dadurch gekennzeichnet, dass** der Trayboden des untersten Trays aus nichtrostendem Stahlblech besteht.

17. Traystapel nach einem der Ansprüche 1 oder 15 bis 16, **dadurch gekennzeichnet, dass** der Trayboden des untersten Trays an seiner Unterseite Standfüsse aufweist.

18. Traystapel nach einem der Ansprüche 1 oder 15 bis 17, **dadurch gekennzeichnet, dass** seine Stapelhöhe bis 4000 mm beträgt.

## Claims

1. Stack of trays comprising a number of trays (1, 1') resp. storage and transport containers for plastic receptacles, in particular plastic bottles, that are arranged on top of one another, wherein the trays have an essentially orthogonal flat tray bottom (2, 2') and essentially rectangular flat side walls (3, 3'), wherein the side walls (3, 3') can be detachably connected together and to the tray bottom (2, 2') via plug-in connections and have inside surfaces (31, 31') that are designed to be metal or metallized, **characterized in that** the tray bottom (2, 2') has a wall and is designed in such a way that the wall (24, 24') that comprises free longitudinal edges of the side walls (3, 3') has a spring action, wherein a base (22') of the upper tray bottom (2') is bent in such a way that the wall (24') is designed as an elastic section that connects to an entry slope (25), and **in that** a longitudinal edge (36) that is free is the assembled state of the side wall (3, 3') and the free longitudinal end (34) of the side wall (3) that is equipped with mounts (6) are bent in an outwardprojecting U-shape.

2. Tray of a stack of trays according to Claim 1, **characterized in that** respectively at least two side walls (3) that are opposite to one another in the assembled state are designed to be similar.

3. Tray according to Claim 2, **characterized in that** each side wall (3) has a number of essentially hook-like connecting projections (5), which project from their one side edge (33), and is equipped on its opposite longitudinal end (34) with a corresponding number of mounts (6), arranged on top of one another and made in the inside surface (31) for connecting projections (5) of a connecting side wall (3).

4. Tray according to Claim 2 or 3, **characterized in that** the tray bottom (2) is equipped along its four sides (23) with sockets (4) for locking straps (7), which project from a longitudinal edge (35) that runs perpendicular to the side edges (33, 34) of a side wall (3) .

5. Tray according to Claim 4, **characterized in that** the sockets (4) are designed on an inner side (21) of the tray bottom (2).

6. Tray according to one of the Claims 2 to 5, **characterized in that** at least the side walls (3) are designed as profile sheets.

7. Tray according to Claim 6, **characterized in that** at least one free longitudinal edge (36) and the longitudinal end (34) of the side wall (3) that is equipped with the mounts (6) are designed as folded sheets.

8. Tray according to Claim 6 or 7, **characterized in that** the tray bottom (2) is designed as a profile sheet.

9. Tray according to one of Claims 6 to 8, **characterized in that** the profile sheets consists of sheet aluminum, preferably of anodized sheet aluminum, or preferably rust-resistant sheet steel.

10. Tray according to one of Claims 6 to 9, **characterized in that** the side walls (3) and the tray bottom (2) are stamped parts.

11. Tray according to one of the Claims 2 to 10, **characterized in that** the tray bottom (2) has a top (21), a base (22) that is opposite to the top (21), and the top (21) and the base (22) have side walls (23) that are permanently connected together, which side walls are flush with the corners of the tray bottom (2), whereby two respectively adjoining side walls (23) are automatically permanently connected together by a corner connector (8).

12. Tray according to one of the Claims 2 to 11, **characterized in that** the tray bottom (2) has dimensions that are up to 1,400 mm x 1,200 mm.

13. Tray according to Claim 12, **characterized in that** it has a height of 150 mm to 400 mm.

14. Tray according to one of the Claims 2 to 13, **characterized in that** the tray bottom (2) is designed in such a way that free longitudinal edges of the side walls (3) of a tray arranged underneath can be rigidly encompassed by its base (22).

15. Stack of trays according to Claim 1, **characterized in that** the tray that is arranged in the uppermost position has a cover that can be pushed onto the free longitudinal edges of the side walls of the uppermost tray in a captive and detachable manner.

16. Stack of trays according to Claim 1 or 15, **characterized in that** the tray bottom of the lowermost tray consists of rust-resistant sheet steel.

17. Stack of trays according to one of Claims 1 or 15 to 16, **characterized in that** the tray bottom of the lowermost tray has feet on its base.

18. Stack of trays according to one of Claims 1 or 15 to 17, **characterized in that** its stack height is up to 4,000 mm.

## Revendications

1. Pile de plateaux comprenant un nombre donné de plateaux (1, 1') disposés les uns au-dessus des autres ou de contenants d'entreposage et de transport pour des récipients en matière plastique, en particulier des bouteilles en matière plastique, dans laquelle les plateaux présentent un fond de plateau (2, 2') plan sensiblement orthogonal et des panneaux latéraux (3, 3') plans sensiblement rectangulaires, dans laquelle les panneaux latéraux (3, 3') peuvent être reliés les uns aux autres et au fond de plateau (2, 2') de manière amovible par l'intermédiaire de liaisons par enfichage et présentent des surfaces intérieures (31, 31') qui sont réalisées de manière métallique ou de manière métallisée, **caractérisée en ce que** le fond de plateau (2, 2') présente une paroi et est réalisé de telle manière que la paroi (24, 24') comprenant des bords longitudinaux libres des panneaux latéraux (3, 3') présente un effet de ressort, dans laquelle un côté inférieur (22') du fond de plateau supérieur (2') est cintré à cet effet de telle manière que la paroi (24') est réalisée en tant que section sur ressorts, qui se raccorde à un chanfrein d'admission (25'), et qu'un bord longitudinal (36) libre du panneau latéral (3) dans l'état monté du panneau latéral (3, 3') et une extrémité longitudinale (34) libre du panneau latéral (3) équipée de logements (6) sont cintrés en forme de U tout en dépassant vers l'extérieur.

2. Plateau d'une pile de plateaux selon la revendication 1, **caractérisé en ce que** respectivement au moins deux panneaux latéraux (3) se faisant face l'un l'autre dans l'état monté sont réalisés de manière similaire.

3. Plateau selon la revendication 2, **caractérisé en ce que** chaque panneau latéral (3) présente un nombre de parties faisant saillie de liaison (5) réalisées sensiblement en forme de crochet, qui dépassent par un bord latéral (33) et est équipé, sur son extrémité longitudinale (34) faisant face, d'un nombre correspondant de logements (6) réalisés dans la surface intérieure (31), disposés les uns au-dessus des autres pour des parties faisant saillie de liaison (5) d'un panneau latéral (3) de raccordement.

4. Plateau selon la revendication 2 ou 3, **caractérisé en ce que** le fond de plateau (2) est équipé le long de ses quatre côtés (23) d'ouvertures d'enfichage (4) pour des brides d'enfichage (7), qui dépassent d'un bord longitudinal (35) s'étendant de manière verticale par rapport aux bords latéraux (33, 34) d'un panneau latéral (3) .

5. Plateau selon la revendication 4, **caractérisé en ce que** les ouvertures d'enfichage (4) sont réalisées sur un côté intérieur (21) du fond de plateau (2).

6. Plateau selon l'une quelconque des revendications 2 à 5, **caractérisé en ce qu'**au moins les panneaux latéraux (3) sont réalisés en tant que profilés en tôle.

7. Plateau selon la revendication 6, **caractérisé en ce qu'**au moins un bord longitudinal libre (36) et l'extrémité longitudinale (34), pourvue de logements (6), du panneau latéral (3) sont réalisés de manière pliée.

8. Plateau selon la revendication 6 ou 7, **caractérisé en ce que** le fond de plateau (2) est réalisé en tant que profilé en tôle.

9. Plateau selon l'une quelconque des revendications 6 à 8, **caractérisé en ce que** les profilés en tôle sont constitués de tôle en aluminium, de manière préférée de tôle en aluminium anodisée ou de préférence de tôle en acier inoxydable.

10. Plateau selon l'une quelconque des revendications 6 à 9, **caractérisé en ce que** les panneaux latéraux (3) et le fond de plateau (2) sont des pièces estampées.

11. Plateau selon l'une quelconque des revendications 2 à 10, **caractérisé en ce que** le fond de plateau (2) présente un côté supérieur (21), un côté inférieur (22) faisant face au côté supérieur (21) et des parois latérales (23) reliant de manière inamovible l'un à l'autre le côté supérieur (21) et le côté inférieur (22), lesquelles sont contiguës de manière émoussée en des angles du fond de plateau (2), dans lequel deux parois latérales (23) respectivement contiguës sont reliées l'une à l'autre de manière inamovible en toute autonomie par un raccord d'angle (8).

12. Plateau selon l'une quelconque des revendications 2 à 11, **caractérisé en ce que** le fond de plateau (2) présente des dimensions, qui vont jusqu'à 1400 mm x 1200mm.

13. Plateau selon la revendication 12, **caractérisé en ce qu'**il présente une hauteur de 150 mm à 400 mm.

14. Plateau selon l'une quelconque des revendications 2 à 13, **caractérisé en ce que** le fond de plateau (2) est réalisé de telle manière que des bords longitudinaux libres des panneaux latéraux (3) d'un plateau disposé en dessous peuvent être entourés respectivement de manière immuable par son côté inférieur (22).

15. Pile de plateaux selon la revendication 1, **caractérisée en ce que** le plateau disposé sur la position la plus haute présente un couvercle, qui peut être emboîté de manière imperdable et amovible sur les bords longitudinaux libres des panneaux latéraux du plateau le plus haut.

16. Pile de plateaux selon la revendication 1 ou 15, **caractérisée en ce que** le fond de plateau du plateau le plus bas est constitué d'une tôle en acier inoxydable.

17. Pile de plateaux selon l'une quelconque des revendications 1 ou 15 à 16, **caractérisée en ce que** le fond de plateau du plateau le plus bas présente sur son côté inférieur des supports.

18. Pile de plateaux selon l'une quelconque des revendications 1 ou 15 à 17, **caractérisée en ce que** sa hauteur de pile va jusqu'à 4000 mm.
